# EUROPEAN PATENT SPECIFICATION

(11) **EP 3 258 649 B1**
(45) Date of publication and mention of the grant of the patent: **11.11.2020**
(21) Application number: 16748560.6
(22) Date of filing: 18.01.2016
(51) Int. Cl.: H04L 12/28

(54) **PASSIVE OPTICAL HUB**
PASSIVER GLASFASER-HUB
HUB À FIBRE OPTIQUE PASSIF

(30) Priority: 12.02.2015 CN 201510076644
(43) Date of publication of application: 20.12.2017
(73) Proprietor: ZTE Corporation, Shenzhen, Guangdong 518057 (CN)
(72) Inventor: LI, Mingsheng, Shenzhen Guangdong 518057 (CN); XU, Aijun, Shenzhen Guangdong 518057 (CN); CHEN, Wu, Shenzhen Guangdong 518057 (CN); ZHANG, Weiliang, Shenzhen Guangdong 518057 (CN)
(74) Representative: Patentanwälte Bals & Vogel
(86) International application number: PCT/CN2016/071215
(87) International publication number: WO 2016/127759

(56) References cited:
- CN-A- 101 459 591
- CN-A- 101 489 155
- CN-A- 101 741 660
- CN-A- 101 753 211
- CN-A- 102 347 857
- US-A1- 2005 018 669
- US-A1- 2005 036 786
- US-A1- 2010 124 419
- US-A1- 2010 142 888
- US-A1- 2015 023 638
- US-B1- 7 181 142

## Description

### TECHNICAL FIELD

The present disclosure relates to the field of communications, and more particularly, to a signal processing method, apparatus, and passive fiber hub.

### BACKGROUND

With the development of broadband / HD video and other services, users' demand for bandwidth is getting higher and higher. In the access side, operators have been able to provide passive optical network (referred to as PON) / Gigabit transmission G.fast / third generation wired data transmission system DOCSIS3.0 gigabit rate level of home bandwidth. The backbone bandwidth of the home network is also increased from 100 megahertz to gigabit, such as Gigabit Ethernet, gigabit WiFi 802.11ac, gigabit indoor power line communications HomePlug AV2 and International Telecommunication Union (ITU) Ghn.

Institute for Electrical and Electronic Engineers (IEEE) 802.11ad is the latest LAN wireless communication technology, which is mainly used to achieve the home wireless high-definition audio and video signal transmission, and to provide more complete HD video solutions for home multimedia applications. In 802.11ad, 60GHz spectrum, rather than the crowded 2.4GHz or 5GHz band, is used, and thus the transmission speed can reach up to 7Gbps.

Due to poor penetration of the 60GHz band and signals attenuate badly in the air, both the transmission distance and the signal coverage thereof are greatly affected, and as a result, effective connection can only be confined to a very small range. In general, 802.11ad is used as a channel for high-speed wireless transmission between devices in rooms.

An ordinary family house usually includes multiple rooms. Power lines cannot provide transmission speed up to 7Gbps for to a return channel from the 802.11ad access point equipment in a room to a home gateway, while 10G Ethernet is too expensive and it has a high requirement for cable medium. A fast, reliable, no bottlenecks and cost-controllable return transmission method is desired in the art.

Fiber transmission capacity is massive. There are two kinds of optical fiber communication topologies: Point to Point (referred to as P2P) and Point to Multiple Point (referred to as P2MP). In a P2P network, multiple fiber interfaces need to be configured, the number of which is based on the number of access point equipments in the home gateway, and therefore the cost is not controllable. P2MP is mainly used for access networks, and the control protocol thereof is more complex. Access point equipments can communicate with the home gateway equipment, but the access point equipments cannot communicate with each other directly. They have to exchange data via the home gateway, and thus there are communication bottlenecks. If the home gateway is abnormal, the network will be unavailable, and then there will be a single point of failure. US 2010/0124419A1 relates to an electrical connector device, which includes an optic fiber hub and a plurality of electrical embedded interfaces connected to the optic fiber hub. The optic fiber hub is connected to monitoring equipments or communication networks, and the electrical embedded interfaces are installed electrical devices and connected to the optic fiber hub, such that the electrical devices can transmit data and instructions to the monitoring equipments, the communication networks or each other by the electrical connector device. US 2015/0023638A1 relates to a low loss passive optical hub for use in the passive optical fiber networks. A node for a low loss passive optical hub is provided. The low loss passive optical hub includes a 1:N-split fiber and a plastic-optical fiber. The 1:N-split fiber has a fused-fractional end and N second-fractional ends. The 1 :N-split fiber is formed from N sub-fibers. The N sub-fibers each have a first-fractional end and a second-fractional end. The N first-fractional ends are fused to form the fused-fractional end. The plastic-optical fiber has a first end and a second end. The first end of the plastic-optical fiber is optically coupled to the fused-fractional end of the 1:N-split fiber. US 20150023638 A1 is proposed to solve the return loss, reflectivity losses, dispersion and uniformity losses due to mirror or return loop in plastic optical fiber in avionic lower bandwidth (10-50 mbps). US 2010/0142888 A1 proposes a device that may provide a first opening via which a feeder optical fiber cable that carries an input signal enters the device. In addition, the device may include a slot configured to retain a splitter module. The splitter module may include a single-fiber input cable that receives and carries the input signal from the feeder optical fiber cable, an optical splitter that receives the input signal from the single-fiber input cable, splits the input signal into a plurality of output signals, and a multi-fiber output cable that receives the plurality of output signals from the optical splitter and carries the plurality of output signals.

However, there is still not any effective solution to solve the problem of poor communication quality between the access point devices in the related technology.

### SUMMARY

The present invention is defined in the appended independent claims to which reference should be made. Advantageous features are set out in the appended dependent claims.

According to the present disclosure, by receiving an optical signal transmitted from a first access point device in a home network and forwarding the received optical signal to two or more second access points in the home network device with optical fibers, the problem of poor communication quality between the access point devices in the related technology is solved, and thereby the communication quality between the access point devices is improved.

### BRIEF DESCRIPTION OF THE DRAWINGS

The drawings described herein are provided to facilitate a further understanding of the disclosure, which constitute a part of the disclosure. The illustrative embodiments of the disclosure and its description are intended to be illustrative of the disclosure and do not limit the scope of the disclosure in any way. In the drawings:
Figure 1 is a flow chart of a signal processing method according to an embodiment of the present disclosure.
Figure 2 is a block diagram illustrating a structure of a signal processing apparatus according to an embodiment of the present disclosure.
Figure 3 is a block diagram of a structure of a passive fiber hub according to an embodiment of the present disclosure.
Figure 4 is a diagram of a home fiber network according to an embodiment of the present disclosure.
Figure 5 is a schematic diagram of a Y-type splitter according to an embodiment of the present disclosure.
Figure 6 is a schematic diagram of an internal structure of a 3-port hub according to an embodiment of the present disclosure.
Figure 7 is a schematic diagram of the internal structure of a 4-port passive fiber hub according to an embodiment of the present disclosure.
Figure 8 is a schematic diagram of the internal structure of a 5-port passive fiber hub according to an embodiment of the present disclosure.
Figure 9 is a schematic diagram of the internal structure of a 6-port passive fiber hub according to an embodiment of the present disclosure.
Figure 10 is a diagram illustrating an interface of a regional access point according to an embodiment of the present disclosure.
Figure 11 is a schematic diagram of a first home optical fiber network with a passive fiber hub as the core according to an embodiment of the present disclosure, and
Figure 12 is a schematic diagram of a second home optical fiber network with a passive fiber hub as the core according to an embodiment of the present disclosure.

### DETAILED DESCRIPTION

Hereinafter, the present disclosure will be described in details with reference to the accompanying drawings. It is to be noted that the features in the embodiments and examples of the present disclosure may be combined if they do not conflict with each other.

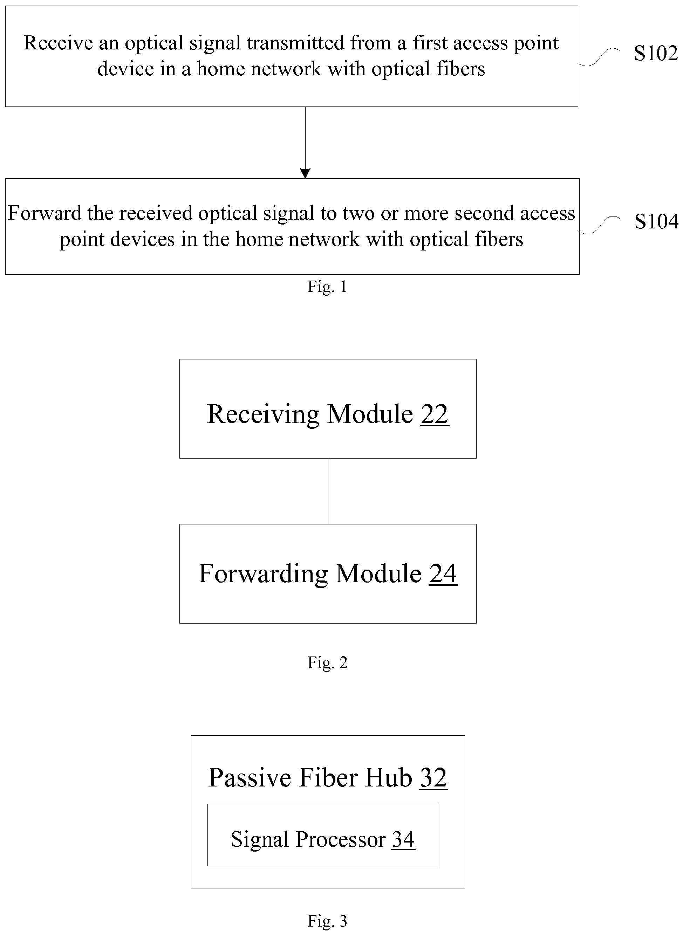

A signal processing method is provided in one embodiment. Figure 1 is a flow chart of a signal processing method according to the present embodiment of the present disclosure. As shown in Figure 1, the method includes the following steps.

At step S102, an optical signal transmitted from a first access point device in a home network with optical fibers is received; and

At step S104, the received optical signal is forwarded to two or more second access point devices in the home network with optical fibers.

By way of the above steps, the optical signal transmitted from the first access point device in the home network is forwarded to the second access point device by using the optical fibers, and thereby the communication quality between the access point devices can be improved. In this way, the problem of poor quality of communication between the input devices in the related technology is solved and the communication quality between the access point devices is improved.

As to the above mentioned first and second access point devices, a plurality of types of interfaces can be used. For example, in an alternative embodiment, the first access point may comprise at least an optical fiber interface; and the second access point may comprise at least an optical fiber interface. Or alternatively, the second access point includes at least an optical fiber interface.

A signal processing apparatus is provided in another embodiment, the apparatus being configured to implement the above mentioned embodiments and preferable embodiments. Details of the embodiments have been described above and thus will not be repeated here. Although the devices described in the following embodiments are preferably implemented in software, the implementation of hardware, or a combination of software and hardware, is also possible and envisioned.

Figure 2 is a block diagram illustrating a structure of a signal processing apparatus according to an embodiment of the present disclosure. As shown in Figure 2, the apparatus includes a receiving module 22 and a forwarding module 24, which will be explained hereinafter.

The receiving module 22 is configured to receive an optical signal transmitted from a first access point device in a home network with optical fibers. And the forwarding module 24 is connected to the receiving module 22 and configured to forward the received optical signal to two or more second access point devices in the home network with optical fibers.

In the present embodiment, the first access point includes at least an optical fiber interface; and the second access point includes at least an optical fiber interface.

Figure 3 is a block diagram of a structure of a passive fiber hub according to an embodiment of the present disclosure. As shown in Figure 3, the passive fiber hub 32 includes a signal processing apparatus 34 as described above.

In the present embodiment, the number of ports of the passive fiber hub is greater than or equal to a predetermined threshold, and the number of port optical splitters within the passive fiber hub and the number of the ports is in a predetermined ratio, each of the ports being connected to a corresponding port optical splitter, respectively. The ports communicate data with each other via the port optical splitters connected with the ports. Or alternatively, the ports communicate data with each other via the port optical splitters connected with the ports and one or more non-port optical splitters in the passive fiber hub, wherein the non-port optical splitters are those optical splitters in the passive fiber hub other than the port optical splitters.

In an alternative embodiment, the aforesaid predetermined threshold is 3, and the predetermined ratio includes at least one selected from: 1: 2, 1: 3 and 1: 4. Of course, the predetermined ratio may be other proportions according to actual application situations, and will not be enumerated here.

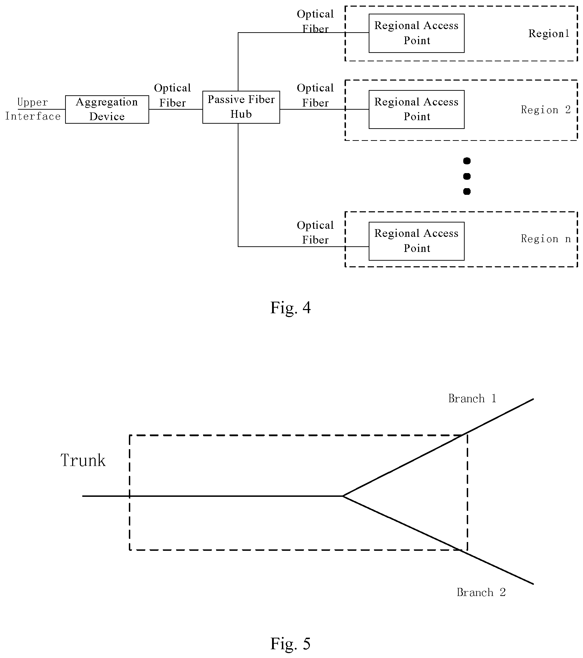

In an embodiment of the present disclosure, there is provided a passive optical fiber hub and a home optical fiber networking method with a passive fiber hub as a core. Figure 4 is a diagram of a home optical fiber network according to one embodiment of the present disclosure. As shown in Figure 4, an optical signal input from any port of the passive fiber hub will be output from all other ports. The number of ports of the passive fiber hub may be at least 3, and the number of ports can be arbitrarily expanded. The internal structure of the passive fiber hub generally includes a combination of multiple Y-type splitters (1: 2 optical splitters, with a trunk optical interface, two branch optical interfaces). Of course, other types of optical splitters can also be used, such as 1: 3 optical splitter and 1: 4 optical splitter, as will be described hereinafter. The structure of the optical splitter is shown in Figure 5, which is a schematic diagram of a Y-type splitter according to an embodiment of the present disclosure.

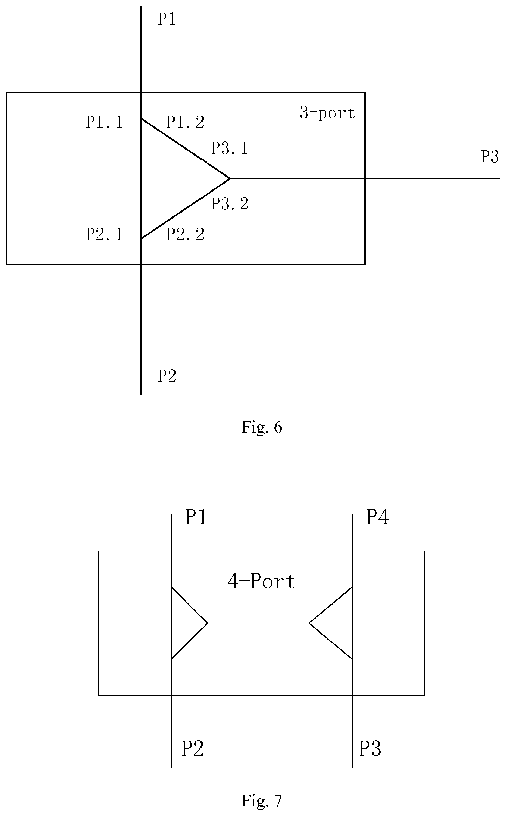

Figure 6 is a schematic diagram of an internal structure of a 3-port hub according to an embodiment of the present disclosure. In figure 6, a trunk side of the Y-type splitter is used as a passive fiber hub external port. The Y-type branches are connected with each other within the passive fiber hub. Branch P1.1 is connected to branch P2.1, branch P1.2 is connected to branch P3.1, and branch P2.2 is connected to branch P3.2, so as to form a triangular interconnection topology. When the optical signal is input from P1 port, it is transmitted to branches P1.1 and P1.2 at the bifurcation point. A part of the optical signal travels along P1.1 → P2.1 → P2 and output at P2; and the other part travels along P1.2 → P3.1 → P3 and output at P3. Similarly, an optical signal input from the P2 port will be output at the P1 and P3 ports, and an optical signal input from the P3 port will be output at the P1 and P2 ports.

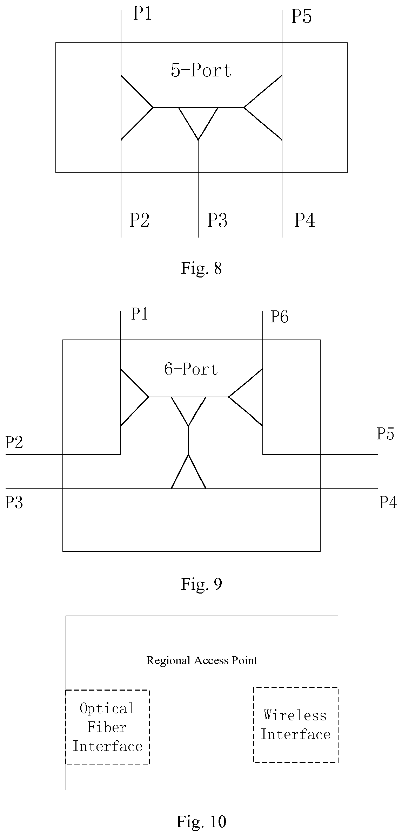

When there are more than three ports in the passive fiber hub, for each additional port, three Y-type splitters need to be added, and one more triangular interconnection topology will be added to the internal structure of the passive fiber hub. Figure 7 is a block diagram of a 4-port passive optical fiber according to an embodiment of the present disclosure. Figure 8 is a schematic diagram of the internal structure of a 5-port passive fiber hub according to an embodiment of the present disclosure. Figure 9 is a schematic diagram showing the internal structure of a 6-port passive fiber hub according to an embodiment of the present disclosure.

Among them, the Y-type splitter can equally or unequally split optical power, and the Y-type splitter can be implemented by fused biconical taper (FBT) or planar light-wave circuit (PLC) process.

The internal structure of the passive fiber hub described above can also comprise a combination of splitters with 1: 3, 1: 4 or more branches. In case 1: 3 splitters are used, only four splitters are required in a 4-port hub. In case 1: 4 splitters are used, only five splitters are required in a 5-port hub. Of course, other splitters like 1: 5, 1: 6 splitters can also be used.

In an embodiment of the present disclosure, there is also provided a home optical fiber networking method using a passive fiber hub as described above, wherein the passive fiber hub and the convergence device/regional access point (the same with the above-mentioned first access point and second access point) are connected by optical fibers. The hub shunts the physical light signal, and do not perform any data analysis and processing in data link layer and upper level of an OSI/RM seven-layer model. The above mentioned optical fiber may be single mode optical fiber or multimode fiber. The convergence device has the interface aggregation capability and service aggregation ability, wherein the interface aggregation capability includes, but is not limited to, a home gateway interface such as an Ethernet interface, an 802.11 wireless network interface, a power line network interface, a coaxial network, and Ethernet Passive Optical Network (EPON), Gigabit-Capable Passive Optical Network (GPON), 10G EPON, XG-PON, Very High Speed Digital Subscriber Line (VDSL)2, G. fast, DOCSIS3.0/3.1 and other broadband network access interface. Service aggregation capabilities include, but not limited to, the Internet, Voice over Internet Protocol (VoIP), Internet Protocol Television (IPTV), Over the Top (OTT), games and other services.

The regional access point is provided with a wireless interface that provides high-speed wireless access services for clients in the region. Figure 10 is a diagram illustrating an interface of a regional access point according to an embodiment of the present disclosure. As shown in Figure 10, the regional access point may include an optical fiber interface and a wireless interface, so as to provide more options for the data transmissions. The above-mentioned convergence devices and the regional access points perform data exchange, analysis and processing of the second layer defined by the Open System Interconnection (OSI) seven-layer model. The data link layer of the OSI/RM seven-layer model of the optical fiber interface of the above convergence devices adopts the Ethernet CSMA/CD mechanism. The data link layer of the OSI/RM seven-layer model of the optical fiber interface of the above regional access point adopts the Ethernet CSMA / CD mechanism.

The present disclosure will now be described with reference to specific examples.

### Embodiment One

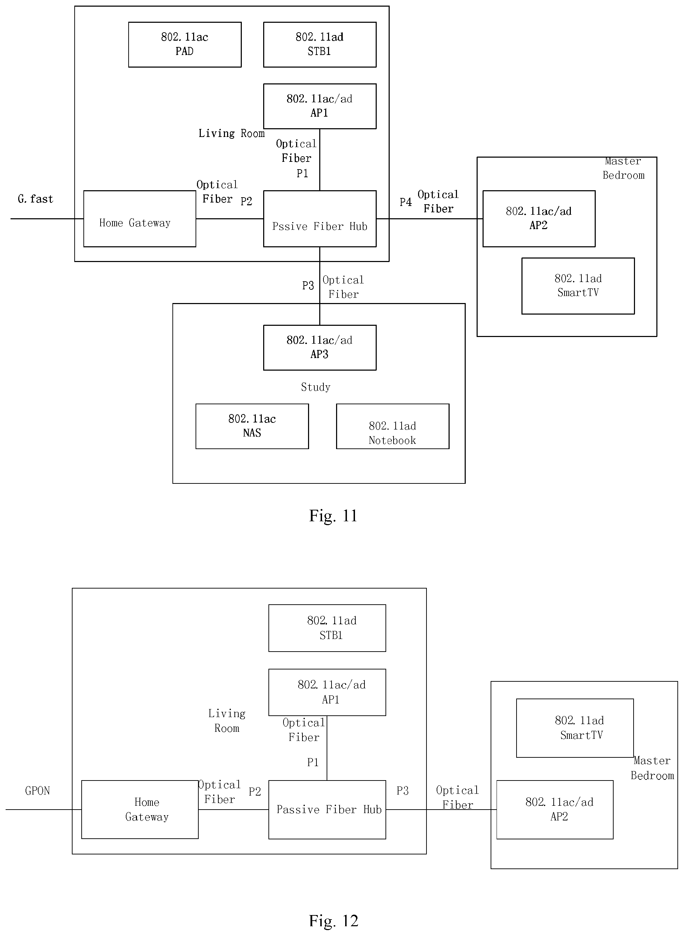

Figure 11 is a schematic diagram of a first home optical fiber network with a passive fiber hub as the core according to an embodiment of the present disclosure. In this embodiment, the user uses the G.fast home gateway as a convergence device, the passive fiber hub is provided with four optical fiber interfaces, two 802.11ac/ad APs are used as regional access points in the living room and study, and an 802.11ad AP is used as a regional access point in the master bedroom.

A STB1 that is provided with an 802.11ad interface in the living room is connected to the AP1, and the AP1 is connected to AP3 in the study via the P1 port and P3 port of the hub, so that STB1 can play the high-definition 8K 3D ultra-high-definition video stored in the NAS, and thus the interworking between the P1 port and P3 Port of the hub is achieved.

A PAD that is provided with an 802.11ac interface in the living room is connected to the AP1, and the AP1 is connected to AP2 in a master bedroom via the P1 port and P3 port of the hub. A Smart TV that is provided with an 802.11ad interface in the master bedroom is connected to the AP2. Users use the PAD and the smart TV to play a double-player networking game, and thus the interworking between the P1, P2 and P4 ports of the hub is achieved.

### Embodiment Two

Figure 12 is a schematic diagram of a second home optical fiber network with a passive fiber hub as the core according to an embodiment of the present disclosure. In this embodiment, the user uses the GPON home gateway as the aggregation device, the passive fiber hub is provided with three optical interfaces, two 802.11ad AP, as the regional access points, are located in the living room and the master bedroom, respectively.

STB1 in the living room is connected to the AP1, which requests an Internet 8K 3D HDTV ultra-high definition 3D video source. The video stream on demand flows from the home gateway into the fiber hub P2 port, and is output from the P1 port and P3 port. The AP1 receives data frames transmitted from the P1 port of the hub, analyzes the destination MAC address of the data link layer, and sends the data frames to the STB1 if the address is successfully matched. The STB1 decodes and plays the video stream. At the same time, the AP2 receives the data frames sent from the P3 port of the hub, analyzes the destination MAC address of the data link layer, and finds that the MAC address has been learned at the same port of the data frame. Then, the AP2 discards the data frame according to the two-tier Ethernet Bridge forwarding rules.

As can be seen from the above embodiments, the present disclosure has the following technical effects: a passive fiber hub can be used to form a peer-to-peer optical fiber local area network, which avoids the flow bottleneck when data aggregates to the gateway device; since the hub is a passive device, with low failure rate, high reliability, low cost, and optical fibers with a mass bandwidth, it can easily carry ultra-high-speed traffic data, and then 802.11ad 7Gbps and other ultra-high bandwidth technology in the future data return functions can be realized.

The passive fiber hub described in the present disclosure can be used not only for home networking, but also in applications such as cars and tanks, so as to implement high-reliability networking.

Embodiments of the present disclosure further provide a storage medium. In an exemplary embodiment, in the present embodiment, the above-described storage medium may be arranged to store program code for performing the following steps:
At step S1, an optical signal transmitted from a first access point device in a home network with optical fibers is received; and
At step S2, the received optical signal is forwarded to two or more second access point devices in the home network with optical fibers.

In an exemplary embodiment, in the present embodiment, the above-described storage medium may include, but is not limited to, a USB disk, a Read-Only Memory (ROM), a random access memory (RAM) Mobile hard disk, disk or CD and other media that can store program code.

In an exemplary embodiment, in the present embodiment, the processor executes the steps in the above-described method embodiments according to the program code stored in the storage medium.

It will be apparent to those skilled in the art that the above-described modules or steps of the present disclosure may be implemented by a general purpose computing device, and those modules may be provided on a single computing device or distributed over a network of multiple computing devices. In an exemplary embodiment, they may be implemented by program code executable by the computing device so that they may be stored in a storage device by a computing device and, in some cases, may be performed in a different order from the steps shown or described above. Those modules may be made separately into individual integrated circuit modules, or multiple modules or steps among them may be made into a single integrated circuit module. Thus, the present disclosure is not limited to any particular combination of hardware and software.

### INDUSTRIAL APPLICABILITY

As described above, a signal processing method, apparatus, and passive fiber hub provided by the embodiments of the present disclosure have the following advantageous effects: the problem of poor communication quality between the access point devices existing in the related technology is solved, and the quality of communication between access point devices is improved.

## Claims

1. A signal processing method for use in a passive fiber hub in a home network, including:
receiving an optical signal transmitted from a first access point device in a home network with optical fibers (S102); and
forwarding the received optical signal to two or more second access point devices in the home network with optical fibers (S104),
wherein the number of ports of the passive fiber hub is greater than or equal to a predetermined threshold, each of the ports being connected to a corresponding port optical splitter, respectively, wherein the number of port optical splitters within the passive fiber hub and the number of the ports is in a predetermined ratio, and the ports transmit data with each other via the port optical splitters connected with the ports and one or more non-port optical splitters in the passive fiber hub, wherein the non-port optical splitters are those optical splitters in the passive fiber hub other than the port optical splitters;
wherein, when an internal structure of the passive fiber hub includes a combination of multiple Y-type splitters, a trunk side of each Y-type splitter is used as a passive fiber hub external port, Y-type branches are connected with each other within the passive fiber hub; and when there are more than three ports in the passive fiber hub, for each additional port, three Y-type splitters are added.

2. The method according to claim 1, wherein
the first access point includes at least an optical fiber interface; and
the second access point includes at least an optical fiber interface.

3. A passive fiber hub (32) for use in a home network, including a signal processing apparatus (34) which includes:
a receiving module (22), configured to receive an optical signal transmitted from a first access point device in a home network with optical fibers; and
a forwarding module (24), configured to forward the received optical signal to two or more second access point devices in the home network with optical fibers,
wherein the number of ports of the passive fiber hub is greater than or equal to a predetermined threshold, each of the ports being connected to a corresponding port optical splitter, respectively, wherein the number of port optical splitters within the passive fiber hub and the number of the ports is in a predetermined ratio, and the ports transmit data with each other via the port optical splitters connected with the ports and one or more non-port optical splitters in the passive fiber hub, wherein the non-port optical splitters are those optical splitters in the passive fiber hub other than the port optical splitters;
wherein, when an internal structure of the passive fiber hub includes a combination of multiple Y-type splitters, a trunk side of each Y-type splitter is used as a passive fiber hub external port, Y-type branches are connected with each other within the passive fiber hub; and when there are more than three ports in the passive fiber hub, for each additional port, three Y-type splitters are added.

4. The passive fiber hub (32) according to claim 3, wherein the predetermined threshold is 3, and the predetermined ratio includes at least one selected from: 1: 2, 1: 3 and 1: 4.

## Patentansprüche

1. Signalverarbeitungsverfahren zur Verwendung in einem passiven Faser-Hub in einem Heimnetzwerk, umfassend:
Empfangen eines optischen Signals, das von einer ersten Zugangspunktvorrichtung in einem Heimnetzwerk mit optischen Fasern übertragen wird (S102); und
Weiterleiten des empfangenen optischen Signals an zwei oder mehrere zweite Zugangspunktvorrichtungen in dem Heimnetzwerk mit optischen Fasern (S104),
wobei die Anzahl von Anschlüssen des passiven Faser-Hubs größer oder gleich einem vorbestimmten Schwellenwert ist, wobei jeder der Anschlüsse jeweils mit einem entsprechenden optischen Anschluss-Teiler verbunden ist, wobei die Anzahl der optischen Anschluss-Teiler innerhalb des passiven Faser-Hubs und die Anzahl der Anschlüsse in einem vorbestimmten Verhältnis stehen und die Anschlüsse miteinander Daten über die optischen Anschluss-Teiler übertragen, die mit den Anschlüssen und einem oder mehreren optischen Nicht-Anschluss-Teilern in dem passiven Faser-Hub verbunden sind, wobei die optischen Nicht-Anschluss-Teiler diejenigen optischen Teiler in dem passiven Faser-Hub sind, die nicht die optischen Anschluss-Teiler sind;
wobei, wenn eine interne Struktur des passiven Faser-Hubs eine Kombination von mehreren Y-Typ-Teilern umfasst, eine Stammseite jedes Y-Typ-Teilers als ein externer Anschluss des passiven Faser-Hubs verwendet wird, wobei Y-Typ-Zweige innerhalb des passiven Faser-Hubs miteinander verbunden sind; und wenn mehr als drei Anschlüsse im passiven Faser-Hub vorhanden sind, für jeden zusätzlichen Anschluss drei Y-Typ-Teiler hinzugefügt werden.

2. Verfahren nach Anspruch 1, wobei
der erste Zugangspunkt mindestens eine Glasfaserschnittstelle umfasst; und
der zweite Zugangspunkt mindestens eine Glasfaserschnittstelle umfasst.

3. Passiver Faser-Hub (32) zur Verwendung in einem Heimnetzwerk, umfassend einen Signalverarbeitungsapparat (34), der Folgendes umfasst:
ein Empfangsmodul (22), das so konfiguriert ist, dass es ein optisches Signal empfängt, das von einer ersten Zugangspunktvorrichtung in einem Heimnetzwerk mit optischen Fasern übertragen wird; und
ein Weiterleitungsmodul (24), das so konfiguriert ist, dass es das empfangene optische Signal an zwei oder mehrere zweite Zugangspunktvorrichtungen im Heimnetzwerk mit optischen Fasern weiterleitet,
wobei die Anzahl von Anschlüssen des passiven Faser-Hubs größer oder gleich einem vorbestimmten Schwellenwert ist, wobei jeder der Anschlüsse jeweils mit einem entsprechenden optischen Anschluss-Teiler verbunden ist, wobei die Anzahl der optischen Anschluss-Teiler innerhalb des passiven Faser-Hubs und die Anzahl der Anschlüsse in einem vorbestimmten Verhältnis stehen und die Anschlüsse miteinander Daten über die optischen Anschluss-Teiler übertragen, die mit den Anschlüssen und einem oder mehreren optischen Nicht-Anschluss-Teilern in dem passiven Faser-Hub verbunden sind, wobei die optischen Nicht-Anschluss-Teiler diejenigen optischen Teiler in dem passiven Faser-Hub sind, die nicht die optischen Anschluss-Teiler sind;
wobei, wenn eine interne Struktur des passiven Faser-Hubs eine Kombination von mehreren Y-Typ-Teilern umfasst, eine Stammseite jedes Y-Typ-Teilers als ein externer Anschluss des passiven Faser-Hubs verwendet wird, wobei Y-Typ-Zweige innerhalb des passiven Faser-Hubs miteinander verbunden sind; und wenn mehr als drei Anschlüsse im passiven Faser-Hub vorhanden sind, für jeden zusätzlichen Anschluss drei Y-Typ-Teiler hinzugefügt werden.

4. Passiver Faser-Hub (32) nach Anspruch 3, wobei der vorbestimmte Schwellenwert 3 ist und das vorbestimmte Verhältnis aus mindestens einem der folgenden ausgewählt ist: 1: 2, 1: 3 und 1: 4.

## Revendications

1. Méthode de traitement du signal destinée à être utilisée dans un hub à fibre passive dans un réseau domestique, comprenant :
la réception d'un signal optique transmis à partir d'un premier dispositif de point d'accès dans un réseau domestique par fibres optiques (S102) ; et
la transmission du signal optique reçu à deux ou plusieurs seconds dispositifs de point d'accès dans le réseau domestique par fibres optiques (S104),
dans laquelle le nombre de ports du hub à fibre passive est supérieur ou égal à un seuil prédéterminé, chacun des ports étant connecté à un séparateur optique de port correspondant, respectivement, dans lequel le nombre de séparateurs optiques de port dans le hub à fibre passive et le nombre de ports sont dans un rapport prédéterminé, et les ports transmettent des données les uns avec les autres via les séparateurs optiques de port connectés aux ports et un ou plusieurs séparateurs optiques de non-port dans le hub à fibre passive, dans laquelle les séparateurs optiques de non-port sont les séparateurs optiques dans le hub à fibre passive autres que les séparateurs optiques de port;
dans laquelle, lorsqu'une structure interne du hub à fibre passive comprend une combinaison de plusieurs séparateurs de type Y, un côté du tronc de chaque séparateur de type Y est utilisé comme port externe du hub à fibre passive, les branches de type Y sont connectées les unes aux autres dans le hub à fibre passive; et lorsqu'il y a plus de trois ports dans le hub à fibre passive, pour chaque port supplémentaire, trois séparateurs de type Y sont ajoutés.

2. Méthode selon la revendication 1, dans laquelle
le premier point d'accès comprend au moins une interface à fibre optique ; et
le second point d'accès comprend au moins une interface à fibre optique.

3. Hub à fibre passive (32) destiné à être utilisée dans un réseau domestique, comprenant un appareil de traitement du signal (34) qui comprend :
un module de réception (22), configuré pour recevoir un signal optique transmis à partir d'un premier dispositif de point d'accès dans un réseau domestique par fibres optiques ; et
un module de transmission (24), configuré pour transmettre le signal optique reçu à deux ou plusieurs seconds dispositifs de point d'accès dans le réseau domestique par fibres optiques,
dans lequel le nombre de ports du hub à fibre passive est supérieur ou égal à un seuil prédéterminé, chacun des ports étant connecté à un séparateur optique de port correspondant, respectivement, dans lequel le nombre de séparateurs optiques de port dans le hub à fibre passive et le nombre de ports sont dans un rapport prédéterminé, et les ports transmettent des données les uns avec les autres via les séparateurs optiques de port connectés aux ports et un ou plusieurs séparateurs optiques de non-port dans le hub à fibre passive, dans lequel les séparateurs optiques de non-port sont les séparateurs optiques dans le hub à fibre passive autres que les séparateurs optiques de port;
dans lequel, lorsqu'une structure interne du hub à fibre passive comprend une combinaison de plusieurs séparateurs de type Y, un côté du tronc de chaque séparateur de type Y est utilisé comme port externe du hub à fibre passive, les branches de type Y sont connectées les unes aux autres dans le hub à fibre passive; et lorsqu'il y a plus de trois ports dans le hub à fibre passive, pour chaque port supplémentaire, trois séparateurs de type Y sont ajoutés.

4. Hub à fibre passive (32) selon la revendication 3, dans lequel le seuil prédéterminé est 3, et le rapport prédéterminé comprend au moins un élément choisi parmi : 1 : 2, 1 : 3 et 1 : 4.
